# EUROPEAN PATENT SPECIFICATION

(11) **EP 1 583 321 B1**
(45) Date of publication and mention of the grant of the patent: **30.05.2007**
(21) Application number: 05102582.3
(22) Date of filing: 01.04.2005
(51) Int. Cl.: H04L 29/06, H04L 29/12, A63F 13/12, A63F 13/02

(54) **Binding of wireless game controller to host**
Kopplung einer drahtlosen Spielsteuerungsvorrichtung mit einem Host
Connexion d'un appareil de commande de jeu sans fil avec un hôte

(30) Priority: 02.04.2004 US 817686
(43) Date of publication of application: 05.10.2005
(73) Proprietor: MICROSOFT CORPORATION, Redmond, Washington 98052-6399 (US)
(72) Inventor: Gordon, Gary L., Redmond, Washington 98052-6399 (US); Lum, Richard, Redmond, Washington 98052-6399 (US); Guo, Wei, Redmond, Washington 98052-6399 (US)
(74) Representative: Zimmer, Franz-Josef

(56) References cited:
- EP-A- 1 363 252
- US-A1- 2002 159 434
- US-A1- 2003 104 865
- US-B1- 6 529 119
- US-B1- 6 684 062
- MATHEUS K ET AL: "Fundamental properties of ad-hoc networks like bluetooth: a radio network perspective" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 3050-3054, XP010702689 ISBN: 0-7803-7954-3

## Description

[0004] A game controller and a host establish an initial connection with one another and perform a binding process. The binding process facilitates the exchange of identifiers and other information, so that the game controller and host operate exclusively with one another and avoid interference from other devices.

US-B1-6 529 119 relates to a method and system that allows one wireless device to establish a communication channel with a selected second wireless device. A host/peripheral device architecture is described, where it is desired to direct the peripheral device to establish communications with a different host device. The peripheral stores a device identifier of a host with which communication is sought, and the peripheral then scans for all available hosts in its range and constructs an ordered list of all available hosts, ordered by host identifier. The establishment of communications between devices is described as a distinct two-stage process employing "enumeration" and "binding". In the first phase, "enumeration", the host computer system discovers the presence of a peripheral device, which discovers the presence of the host device, and the two exchange address and identification information. In the second phase "binding", an enumerated peripheral device is assigned a transiently unique identifier by the host and is added to the host's polling cycle. The host and peripheral device may periodically communicate using the peripheral's host-assigned identifier.

### SUMMARY

It is the object of the invention to improve the establishing of a communication link in a gaming system.

This object has been solved by the invention as claimed in the independent claims.

Preferred embodiments are defined by the dependent claims.

### BINDING OF WIRELESS GAME CONTROLLER TO HOST

### TECHNICAL FIELD

This invention relates to peripherals for controlling video games, and more particularly, to game controllers that wirelessly connect to game consoles.

### BACKGROUND

Game controllers facilitate user interaction with video games. Game controllers come in many configurations depending upon the desired gaming environment for which the controllers are to be used. There are multi-purpose game controllers with one or more multi-function actuators for controlling a wide range of games and specialty controllers designed for specific genre of games, such as steering wheels for racing games, weapons for shooting games, and navigation sticks for aviation games.

Certain game controllers are designed to connect with the game hosting systems and specifically to game consoles or personal computers (PCs) using wireless technologies. During game play, such wireless game controllers are designed to exclusively operate with a particular host such as a game console or PC; however interference from other game consoles, game controllers, and other wireless devices may cause interference and affect game play.

### BRIEF DESCRIPTION OF THE CONTENTS

The detailed description is described with reference to the accompanying figures. In the figures, the left-most digit(s) of a reference number identifies the figure in which the reference number first appears. The use of the same reference numbers in different figures indicates similar or identical items.

Fig. 1 illustrates a gaming system with a host game console and a game controller that bind with one another.

Fig. 2 is a block diagram of the host game console.

Fig. 3 is a block diagram of the game controller.

Fig. 4 is a flow diagram showing a general bind process for the game controller and the game console.

Fig. 5 is a flow diagram showing a process for binding the game controller with the game console when RF technology is used.

### DETAILED DESCRIPTION

The following disclosure describes binding between a game controller and a host game console. The game controller and host game console exchange ID (identifiers) that bind them to one another. The exchanged IDs are stored in memory of the game controller and the host game console. Initial communication conditions may be set at the game controller and game console to allow the exchange of IDs. Once IDs are exchanged and stored in respective memory the game controller and host game console to ensure that the two are bound together for ongoing wireless communication. Afterwards wireless communication conditions are restored to their pre-binding levels.

**Gaming System**

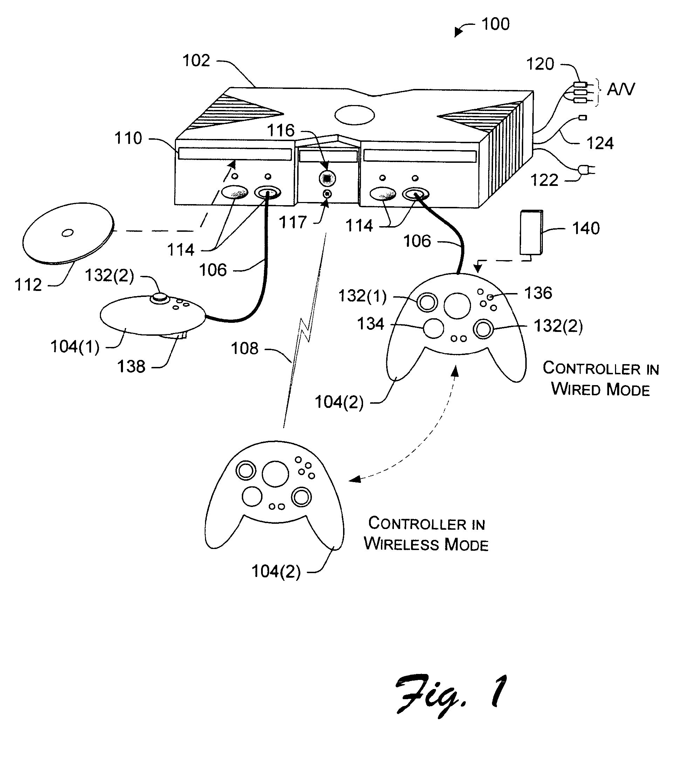

Fig. 1 shows an exemplary console-based gaming system 100. It includes a host game console 102 and up to four controllers, as represented by two game controllers 104(1) and 104(2). In other embodiments host game console 102 may be a personal computer (PC). Each game controller 104 is coupled to the host game console 102 via a wired or wireless interface and utilizes a suitable data protocol, such as USB (Universal Serial Bus). One game controller 104(2) is illustrated as operating in two different modes: a wired mode and a wireless mode. In the wired mode, the game controller 104(2) is connected to the host game console 102 via a cable 106. The game controller 104(2) derives power from the host game console 102 through the cable 106. In the wireless mode, the game controller 104(2) is connected to the host game console 102 via a wireless link 108. The cable 106 may be detached from the game controller 104(2) to provide great freedom of movement.

The wireless link 108 may be implemented using one of various wireless technologies such as IR (infrared), and RF (radio frequency) which includes Bluetooth and WiFi (i.e., IEEE 802.11b). In certain implementations, binding may be performed using wireless link 108 where IDs are exchanged or communicated over wireless link 108 between host game console 102 and game controller 104(2). In other implementations, binding makes use of separate connections and interfaces between host game console 102 and game controller 104(2).

When more than one game controller 104 operates in wireless mode, time division multiple access (TDMA) is employed to allocate a time slot for each game controller 104 to communicate with host game console 102. Therefore only one controller 104 communicates with host game console 102 at any given time, avoiding interference between the game controllers 104.

Once bound, host game console 102 and game controllers communicate using a particular wireless technology (e.g., IR or RF). In the case when multiple channels or frequencies are used to provide communication, such as when the 2.4 GHz ISM (industrial, scientific, medical) radio band is used, game controllers 104 and host game console 102 may use an adaptive frequency hopping (ADH) scheme that provides for an adjusted predetermined hopping sequence between channels. Host game console 102 has a unique frequency hopping sequence in order to avoid interference with other host game consoles that are transmitting and receiving in close proximity. In other words, each host game console is hopping through the channels of the particular radio band using a different sequence. The frequency hopping sequence may be adjusted by identifying good channels and potentially bad channels that may cause interference. This results in an ADH scheme.

A player (i.e., user) can switch between wireless operation and wired operation by connecting the cable 106 to, or disconnecting it from, the host game console 102. Cable 106 provides serial communication between host game console 102 and controller 104(2). While in wired mode, the game controller 104(2) is powered by the host game console 106 and the controller battery is recharged. The cable 106 attaches to and detaches from the controller 104(2).

The host game console 102 is equipped with a portable media drive 110 and an optional internal hard disk drive. The portable media drive 110 supports various forms of portable storage media as represented by an optical storage disc 112. Examples of suitable portable storage media include DVD, CD-ROM, game discs, game cartridges, and so forth.

The host game console 102 has four physical slots 114 on its front face to support and connect up to four controllers, although the number and arrangement of slots may be modified. In the wired mode, the game controllers 104 are assigned to the physical slots 114 for controlling various characters/features of the video game. In wireless mode the game controllers 104(1)-104(2) are assigned to virtual slots.

In one implementation, virtual slots are assigned, without prompting the user, in sequential order to reduce complexity for the user. Thus, the first virtual slot is assigned to the first wireless game controller introduced to the host game console 102; the second virtual slot is assigned to the second wireless game controller, and so on. Alternatively, the user can choose a virtual slot via a user interface presented on the display Actuation of a pre-designated button on the console invokes a slot assignment pane from which the player can select an available virtual slot.

Control buttons 116 are positioned on the front face of the game console 102. Control buttons 116 include, for example, a power button that switches power to the game console and an eject button that alternately opens and closes a tray of the portable media drive 110 to allow insertion and extraction of the storage disc 112. Control buttons 116 further include a binding button 117 that performs an exchange of IDs between game controllers 104 and host game console 102. The binding sequence is performed to initiate (i.e., bind) a game controller 104 to host game console 102.

The host game console 102 connects to a television or other display (not shown) via A/V interfacing cables 120. A power cable 122 provides power to the host game console 102. The host game console 102 may be further equipped with internal or externally added network capabilities, as represented by the cable or modem connector 124 to facilitate access to a network, such as a local area network (LAN) or the Internet.

Each controller 104 may be equipped with any of a wide variety of user interaction mechanisms. As illustrated in Fig. 1, each controller 104 is equipped with two thumbsticks 132(1) and 132(2), a directional or D-pad 134, surface buttons 136, and two triggers 138. These mechanisms are merely representative, and other known gaming mechanisms may be substituted for or added to those shown in Fig. 1.

A memory unit (MU) 140 may be inserted into the game controller 104 to provide additional and portable storage (as illustrated) or alternatively into the host game console 102. Portable memory units enable users to store game parameters and transport them for play on other consoles. In the illustrated implementation, each game controller 104 is configured to accommodate two memory units 140, although more or less than two units may be employed in other implementations. In other implementations, the host game console 102 may support one or more memory units per player.

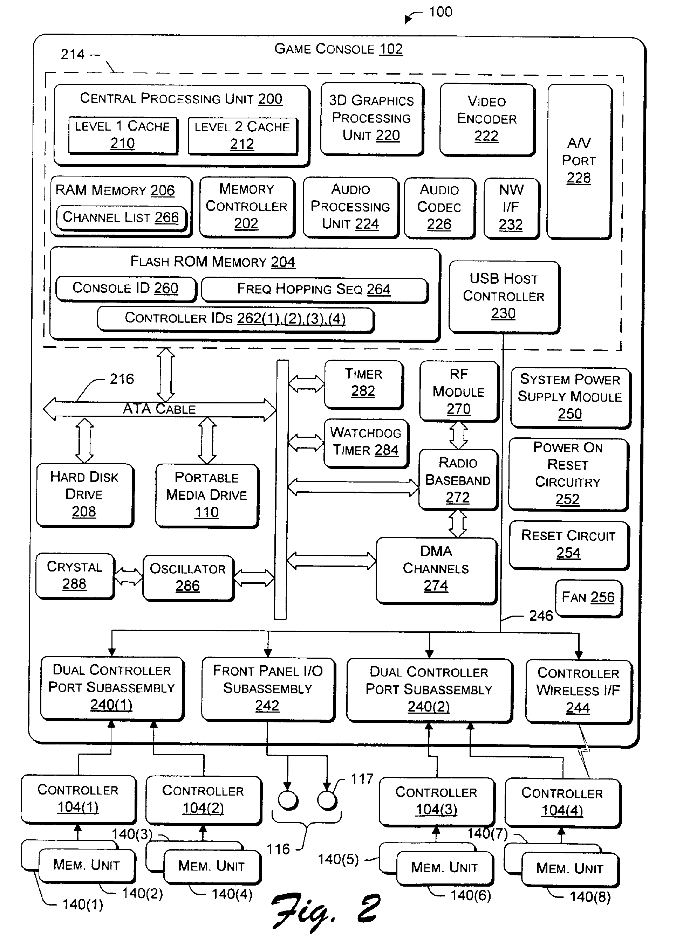

Fig. 2 shows functional components of the host game console 102 in more detail. The host game console 102 has a central processing unit (CPU) 200 and a memory controller 202 that facilitates processor access to various types of memory, including a flash ROM (Read Only Memory) 204, a RAM (Random Access Memory) 206, a hard disk drive 208, and the portable media drive 110. The CPU 200 is equipped with a level 1 cache 210 and a level 2 cache 212 to temporarily store data and hence reduce the number of memory access cycles, thereby improving processing speed and throughput.

The CPU 200, memory controller 202, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnect (PCI) bus.

As one suitable implementation, the CPU 200, memory controller 202, ROM 204, and RAM 206 are integrated onto a common module 214. ROM 204 is configured as a flash ROM that is connected to the memory controller 202 via a PCI (Peripheral Component Interconnect) bus and a ROM bus (neither of which are shown). RAM 206 is configured as multiple DDR SDRAM (Double Data Rate Synchronous Dynamic RAM) modules that are independently controlled by the memory controller 202 via separate buses (not shown). The hard disk drive 208 and portable media drive 110 are connected to the memory controller 202 via the PCI bus and an ATA (Advance Technology Attachment) bus 216.

A 3D graphics processing unit 220 and a video encoder 222 form a video processing pipeline for high speed and high resolution graphics processing. Data is carried from the graphics processing unit 220 to the video encoder 222 via a digital video bus (not shown). An audio processing unit 224 and an audio codec (coder/decoder) 226 form a corresponding audio processing pipeline with high fidelity and stereo processing. Audio data is carried between the audio processing unit 224 and the audio codec 226 via a communication link (not shown). The video and audio processing pipelines output data to an A/V (audio/video) port 228 for transmission to the television or other display In the illustrated implementation, the video and audio processing components 220-228 are mounted on the module 214.

Also implemented on the module 214 are a USB host controller 230 and a network interface 232. The USB host controller 230 is coupled to the CPU 200 and the memory controller 202 via a bus (e.g., PCI bus) and serves as host for the peripheral controllers 104(1)-104(4). A network interface 232 provides access to a network (e.g., LAN, Internet, etc.) and may be any of a wide variety of various wired or wireless interface components including an Ethernet card, a modem, a Bluetooth module, a cable modem, and the like.

The host game console 102 has two dual controller support subassemblies 240(1) and 240(2), with each subassembly supporting up to two of the game controllers 104(1)-104(4). A front panel I/O subassembly 242 supports the functionality of the control buttons 116 which includes binding button 117, as well as any LEDs (light emitting diodes) or other indicators exposed on the outer surface of the host game console 102.

A controller wireless interface 244 is also provided to support wireless communication with the game controllers 104. Controller wireless interface 244 may include IR and RF interfaces used to receive controller IDs 262(1)-(4) and transmit console ID 260 during binding. The subassemblies 240(1), 240(2), and 242 and controller wireless interface 244 are coupled to the module 214, and particularly the USB controller 230, via one or more cable assemblies 246. In other implementations, game console 102 may include a magnetic card reader, a bar code reader, or physical interface for a key or dongle device used to read or download controller IDs 262(1)-(4) during binding.

Eight memory units 140(1)-140(8) are illustrated as being connectable to the four game controllers 104(1)-104(4), i.e., two memory units for each game controller. Each memory unit 140 offers additional storage on which games, game parameters, and other data may be stored. When inserted into a game controller, the memory unit 140 can be accessed by the memory controller 202. It is noted that, in other implementations, the memory units 140 may be inserted into compatible slots in the game console 102.

A system power supply module 250 provides power to the components of the gaming system 100 and to the game controllers 104 when operating in the wired mode. A power on reset circuitry 252 and reset circuit 254 allow the hot game console 102 to be reset during operation or when power is initially provided (i.e., the game console is turned on). A fan 256 cools the circuitry within the host game console 102.

The host game console 102 may further implement a cryptography engine to perform common cryptographic functions, such as encryption, decryption, authentication, digital signing, hashing, and the like. The cryptography engine may be implemented as part of the CPU 200, or in software stored in memory (e.g., ROM 204, hard disk drive 208) that executes on the CPU, so that the CPU is configured to perform the cryptographic functions.

A console ID (identification) 260 may be permanently stored in ROM memory 204. The value of console ID 260 is used to identify the host game console 102 to game controllers 104 when operating in wireless mode. The console ID 260 is unique to a particular host game console and as an example may be represented as a 32 bit word. The game controllers 104 also have a unique controller ID 262 that is passed to game console 102 during binding. In this implementation, up to four game controllers 104 may be bound to game console 102. The unique controller IDs 262(1), 262(2), 262(3), and 262(4) may also be stored in ROM memory 204. Controller IDs 262(1), (2), (3), (4) may also be represented as a 32 bit word.

A frequency hopping sequence 264 unique to each game console may also be stored in ROM memory 204. The frequency hopping sequence 264 defines which channels are accessed in a particular order by the host game console 102 and game controllers 104 when multiple channels are used, for example when implementing the 2.4 GHz ISM radio band and allocating 41 channels for communication over the radio band.

Furthermore when multiple channels are used, a channel list 266 is stored in RAM memory 206. The channel list 266 describes the particular channels that are used (i.e., channels in the radio band) and which channels are determined by the game console to be good and potentially bad. Channels may be represented as unique 6 bit words and a separate status bit may be used to indicate if a channel is good or potentially bad (i.e., 1 for good, and 0 for potentially bad). The channel list 266 is continuously updated and changed as the host game console 102 performs scanning of channels. In other implementations, game controller 104 may perform scanning and identifying of good and potentially bad channels. In such implementations game controller may create the channel list 266.

In this particular embodiment, console ID 260; controller IDs 262(1), 262(2), 262(3), and 262(4); and frequency hopping sequence 264 are stored in ROM memory 205. Channel list 266 is stored in RAM memory 206. However, in other implementations they may be stored in other physical and logical memory devices of game console 102. For example, since channel list 266 is continuously updated, it may be stored in level 1 cache 210 or level 2 cache 212.

An RF module 270 (e.g., 2.4 GHz ISM module), a radio baseband unit 272, and DMA (Direct Memory Access) channels unit 274 support wireless connectivity to game controllers 104 and background scanning for good and potentially bad channels. The host game console 102 also has timing components to provide timing functionality, including a general purpose timer 282 (e.g., 16-bit timer), a watchdog timer 284, an oscillator 286, and a crystal 288.

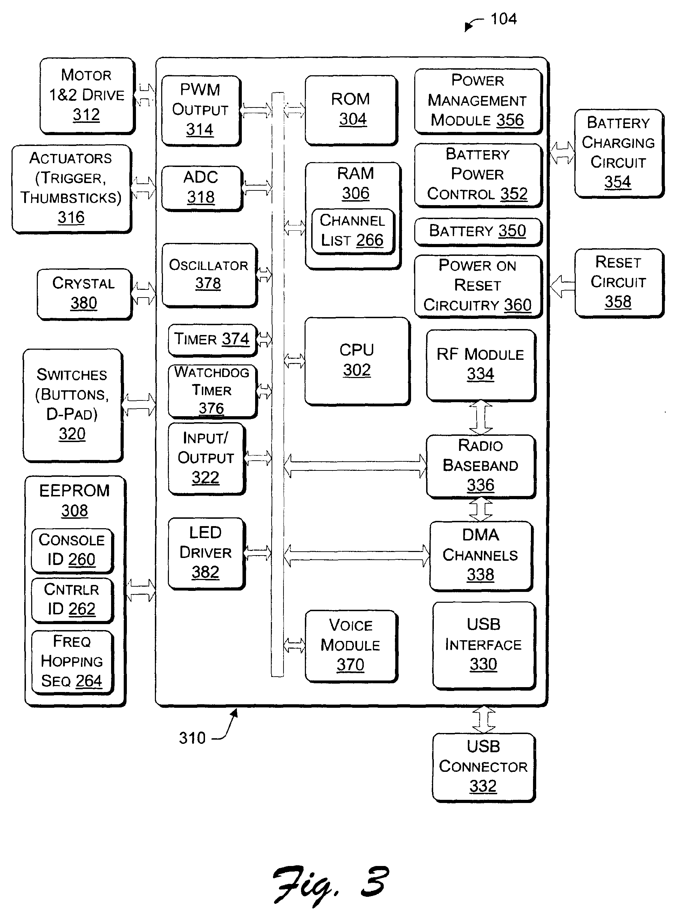

Fig. 3 shows functional components of the game controller 104 in more detail. The game controller 104 has a central processing unit (CPU) 302 and memory, including ROM 304, RAM 306 and EEPROM 308. In the illustrated implementation, the CPU 302, ROM 304, and RAM 306 are integrated onto a common module 310 and are interconnected via one or more bussing structures. EEPROM 308 is separate from, but interfaced with, the module 310.

The game controller 104 further includes motor drives 312 to provide tactile feedback to the player (i.e., user) and a PWM (pulse width modulation) output 314 to provide the control signals for the motor drives. Player actions received via variable-input actuators 316 (e.g., thumbsticks 132 and triggers 138) are converted by analog-to-digital converter (ADC) 318 to provide player input to the CPU 302. ADC 318 can be implemented, for example, as an eight channel 10-bit or 12-bit converter. Other player actions received through dual-state switches 320 (e.g., buttons 136 and D-pad 134) are passed through I/O 322 to CPU 302. A binding button activated by the player may also be included in switches 320. The binding button informs and places the game controller 104 into a binding mode.

As noted above, the game controller 104 supports both wired operation and wireless operation. The game controller 104 includes a USB interface 330 and USB connector 332 for the wired mode of operation. In the illustrated implementation, the game controller 104 is configured to support wireless operation using RF technology. Other implementations may use other wireless technology such as IR. An RF module 334 (e.g., 2.4 GHz ISM module), a radio baseband unit 336, and DMA channels unit 338, support the wireless mode of operation.

During binding with game console 102, controller ID 262 may be transmitted (i.e., passed on) to game console 102 through RF module 334. RF module 334 may also be used to receive console ID 260. In other implementations, game controller 104 may include a magnetic card reader, a bar code reader, or physical interface for a key or dongle device used to read or download console ID 260 during binding.

The game controller 104 is equipped with its own power source to enable wireless operation. In the illustrated implementation, a battery 350 supplies power to the electronic modules and components of the game controller 104. A battery power controller 352 monitors the battery 350 and detects when power is low. Upon detection, a low power condition can be conveyed to the player (e.g., illumination of a light indicator on the game controller or display of a warning while the game is being played). The player can then switch to wired mode by plugging in the cable to the game console. The battery power controller 352 also monitors charging behavior of the battery 350, such as how long it takes to charge and detection of when it is fully charged. In wired mode, the game controller 104 receives power from the game console. A battery charging circuit 354 recharges battery 350 while the game controller is connected via the cable. A reset circuit 358 and power on reset circuitry 360 allow the game controller to be reset during operation or when power is initially provided. A power management module 356 generates voltages for the different components on the module 310 and dynamically manages power consumption of those components.

A voice module 370 may be optionally included in the game controller 104 to receive oral commands or speech from the player (i.e., user). The game controller 104 also has timing components to provide timing functionality, including a general purpose timer 374 (e.g., 16-bit timer), a watchdog timer 376, an oscillator 378, and a crystal 380. The controller 104 further includes an LED driver 382 for one or more LEDs on the controller (e.g., surface buttons 136).

The controller ID 262 of the game controller 104 is permanently stored in EEPROM 308. EEPROM 308 stores a value for console ID 260 that is received from and identifies a particular game console (e.g., game console 102) that is bound to game controller 104. The particular game console further sends its unique frequency hopping sequence 264 that is stored in EEPROM 308. Channel list 266 is also sent from the particular gaming console that describes good and potentially bad channels in the radio band. RAM 306 stores channel list 266. In particular implementations game controller 104 performs scanning of channels and creates channel list 266, and may send it to a bound game console.

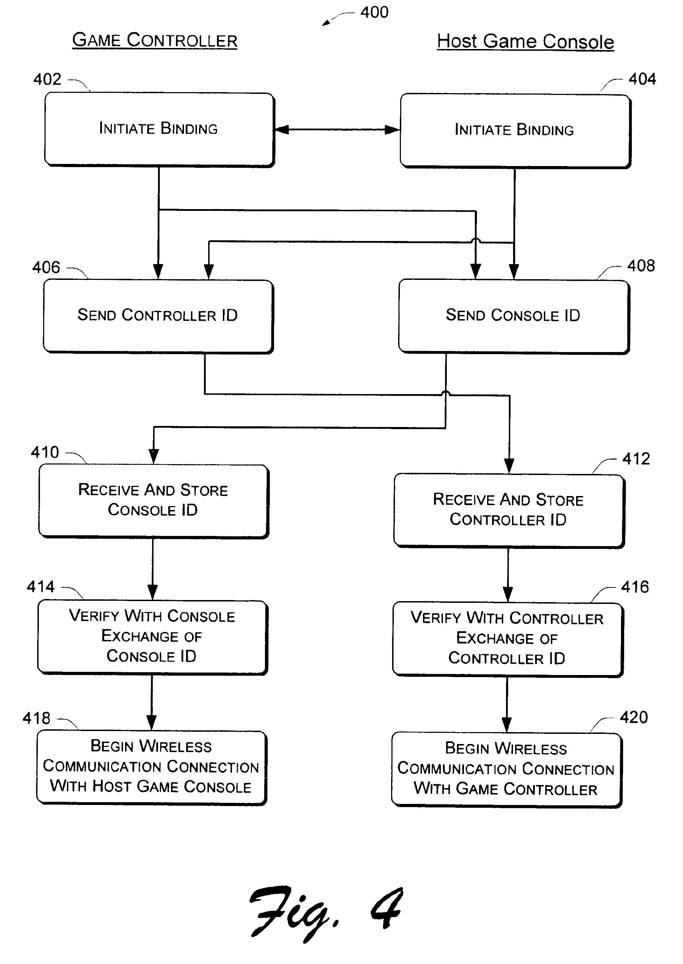

Fig. 4 shows a process 400 for binding a game controller with a host game console. The binding process 400 takes place whenever a game controller and host game console are introduced to one another.

The process 400 is illustrated as a collection of blocks in a logical flow graph, which represent a sequence of operations that can be implemented in hardware, software, or a combination thereof In the context of software, the blocks represent computer instructions that, when executed by one or more processors, perform the recited operations.

At block 402, binding is initiated at the game controller 104. A player (i.e., user) may press a binding button that is included in switches 320 of game controller 104 which places game controller 104 in binding mode. At block 404, binding is initiated at the host game console 102. The player may press binding button 117 that is included in buttons 116 of game console 102 which places host game console 102 in binding mode.

Activating the binding button 117 at the game console 102 may initiate a UI (user interface) to the player as to memory locations that store controller ID values, and may request the player to delete a current controller ID value in order to store a new controller ID value. Upon activating the binding button of the game controller 104, any console ID value in memory of the game controller 104 may be erased in order to store a new console ID value. Furthermore, when RF technology is used as discussed further below, the UI may also instruct the user to place the game controller 104 closer to the host game console 102.

At block 406, the game controller 104 sends its controller ID to the host game console 102. The sending may occur through a wireless communication such as an RF or IR link. Alternatively, the controller ID may be sent (transferred) by a magnetic card, a RF card, or coded card (e.g., a card having a universal product code or UPC).

At block 408, the game console sends its console ID to the game controller 102. The sending may also occur through a wireless communication such as an RF or IR link. Or alternatively, the console ID may be sent (transferred) by magnetic card, RF card, or coded card.

At block 410, the game controller 104 receives and stores the received console ID in appropriate memory (e.g., EEPROM 308). Receiving may be performed through a wireless communication such as an RF or IR link. The console ID may also be received through an appropriate reader included with game controller 104 (e.g., a reader for magnetic card, RF card, or coded card).

At block 412, the host game console 102 receives and stores the received controller ID in appropriate memory (e.g., ROM 204). Receiving may be performed through a wireless communication such as an RF or IR link. The controller ID may also be received through an appropriate reader included with host game console 102 (e.g., a reader for magnetic card, RF card, or coded card).

At block 414, the game controller 104 verifies with host game console 102 that it has received the proper console ID. The verification may be performed by a resending the console ID from host game console 102 and comparing it with the stored console ID in memory of the game controller 104.

At block 416, the host game console 102 verifies with the game controller 104 that it has received the proper controller ID. The verification may performed by resending the controller ID from game controller 104 and comparing it with the stored controller ID in memory of the host game console 102.

At block 418, the game controller 104 begins normal wireless communication connection with host game console 102, where the wireless communication may be an RF or IR link. When an RF link is used normal communication includes particular transmission and sensitivity parameters that allow the game controller 104 and host game console 102 to operate at a great distance (e.g., 10 meters). Furthermore when RF is used, adaptive frequency hopping may be utilized by both the host game console 102 and game controller 104 to avoid interference from other devices operating in the same radio band.

At block 420, the host game console 102 begins normal wireless communication connection with game controller 104, where the wireless communication is the same technology (i.e., RF or IR link) as what is used by the game controller 104.

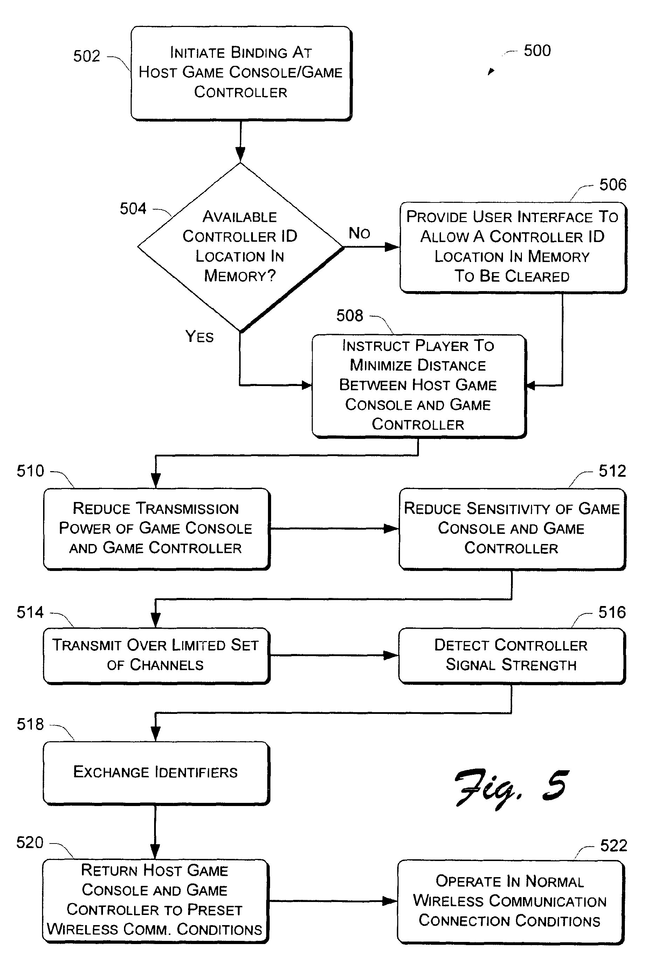

Fig. 5 shows a process 500 for binding a game controller with a game console using RF technology.

The process 500 is illustrated as a collection of blocks in a logical flow graph, which represent a sequence of operations that can be implemented in hardware, software, or a combination thereof. In the context of software, the blocks represent computer instructions that, when executed by one or more processors, perform the recited operations.

The process 500 includes operations performed by both the game controller and a host gaming system. For discussion purposes, the process 500 is described with reference to the game controller 104 and game console 102 described above with respect to Figs. 1-3. It is noted that the process 500 may be implemented by other types of controllers that are designed for both wired and wireless communication, and for other types of gaming systems, such as PCs.

At block 502, a binding session between a game console (i.e., host) and a game controller is initiated. This operation is similar to the operation described in block 402 of process 400 above.

Game console 102 may be bound with multiple game controllers. As discussed in the example above, four game controllers 104 may be bound to game console 102. Each of the game controllers 104 has a unique controller ID 262 that is placed in one of four locations in a memory (e.g., ROM 204) of game console 102.

A determination (i.e., block 504) is made if any of the four locations is available to store a "new" controller ID value. If the four locations in memory that store controller ID values are occupied (i.e., following the "No" branch of block 504), a UI (user interface) is provided to the player to clear one of the four locations in memory (i.e., block 506) to provide for the new game controller ID of the game controller to be bound to the host game console. The UI of block 506 informs the player that the four controller ID locations are full, and instructs the player to choose and delete one of the controller ID numbers in order to provide a location for the new controller ID value.

At block 508, the host game console 102 instructs the player to place the game controller 104 to minimize the distance between the host game console 102 and the game controller 104. Block 508 may be performed by a UI, or a sensory indication such as an audible or visual indicator to the player. By placing the game controller 104 near to host game console 102 the signal transmission between them is stronger and interference form other signals from other devices may be reduced or eliminated.

At block 510, the game console 102 and game controller 104 reduce their RF transmission power to send RF signals. The reduction in transmission power helps to reduce possible interference from other devices and allows host game console 102 and game controller 104 to exclusively communicate with one another.

At block 512, the game console 102 and game controller 104 reduce their sensitivity to receive RF signals. The reduction in reception sensitivity further helps to reduce possible interference from other devices and allows game console 102 and game controller 104 to exclusively communicate with one another.

At block 514, a limited number of channels are used to transmit and receive from. A number of channels may be used for communication between host game console 102 and game controller 104, for example 41 channels may be used. The same frequency hopping sequence may be used by host game console 102 and game controller 104 to hop between the multiple channels; however, until the frequency hopping sequence is provided to the game controller 104 by the game console 102, both may be operating on different channels. Such may be the case during binding, therefore a particular channel or limited set of channels is used to initially connect game console 102 and game controller 104.

At block 516, signal strength of game controller 104 is detected by host game console to eliminate any other nearby game controllers that may be transmitting. The detection may be performed using one or more various known techniques such as RSSI (received signal strength indication), that identifies weak signals that are indicative of other game controllers that are further away than the intended game controller to be bound. Host game console 102 picks up the strongest signal which is presumed to be from the game controller 104 to be bound with host game console 102.

At block 518, IDs are exchanged. The game controller 104 transmits its controller ID 262 number to the host game console 102 which stores the value in a location in its memory. The host game console 102 transmits its console ID 260 number to the game controller 104 which stores the value in its memory. This operation is similar to operations 406-416 of process 400. The game controller 104 may also provide host game console 102 an authentication code which the host game console uses to determine whether binding may take place.

At block 520, game controller 104 and host game console 102 are returned to pre-binding RF communication conditions. This includes restoring full transmission power and full sensitivity levels for the game controller 104 and host game console 102 to send and receive signals.

At block 522, wireless RF communication takes place under normal wireless communication conditions as provided by operation 520. This may include an ADH scheme employed by game controller 104 and host game console 102 to avoid interference from other devices.

Conclusion

The above-described game system binds a game console with one or more game controllers. Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A gaming system (100) comprising:
a host (102); and
a game controller (104) to bind with the host by an exchange of a unique host identifier (260) identifying the host and a unique controller identifier (262) identifying the game controller, wherein the host comprises:
means adapted to instruct a user of the gaming system to place the game controller in close proximity to the host, and means adapted to detect signal strength; and
wherein the host and the game controller comprise means adapted to reduce the transmission power and reception sensitivity of the host and game controller, means (270, 334) adapted to establish a wireless communication link between the host and game controller based on the strongest signal detected by the host, and means adapted to exchange said identifiers.

2. The gaming system as recited in claim 1, wherein:
the host stores the host identifier in permanent memory (204) and stores the controller identifier in writeable memory (206); and
the game controller stores the controller identifier in permanent memory (308) and stores the console identifier in writeable memory (306).

3. The gaming system as recited in claim 1, wherein the host and game controller comprise player activated buttons (320) used to initiate the exchange of identifiers.

4. The gaming system as recited in claim 1, wherein the host and game controller comprise wireless interfaces to establish a wireless link in the exchange of identifiers.

5. The gaming system as recited in claim 4, wherein the wireless interfaces are comprised of one of IR and RF wireless technologies.

6. The gaming system as recited in claim 1, wherein the host and game controller comprise one of the following devices to receive the identifiers : a bar code reader, a magnetic card reader, and a RF card reader.

7. The gaming system as recited in claim 1, wherein the host comprises:
a processor (200);
an interface to receive the controller identifier; and
a memory (204, 206) coupled to the processor to store the host identifier and the controller identifier.

8. The gaming system as recited in claim 1, wherein the game controller comprises:
a processor (302);
an interface to receive the host identifier; and
a memory (304 - 308) coupled to the processor to store the host identifier and the controller identifier.

9. The gaming system as recited in claim 1, wherein the host comprises one of a game console or a personal computer.

10. The gaming system as recited in claim 1, wherein the game controller sends an authentication code to the host and the host determines whether to bind based on the authentication code.

11. The gaming system as recited in claim 1, wherein the game controller is embodied as a general-purpose controller with one or more multi-function actuators (316).

12. The gaming system as recited in claim 1, wherein the host binds to two or more game controllers by providing the game controllers the host identifier and receiving from the game controllers controller identifiers.

13. The gaming system as recited in claim 12, wherein the host further receives authentication codes from the game controllers to determine whether to bind to one or more of the game controllers.

14. A method of binding a host (102) and a game controller (104) using an RF wireless connection (108) comprising:
instructing (508) a user of the game controller that the host and game controller be placed in close proximity to one another, wherein the instructing is performed by the host;
reducing (510, 512) the transmission power and reception sensitivity of the host and game controller;
detecting (516) signal strength at the host;
establishing a wireless communication link between the host and game controller based on the strongest signal detected by the host; and
exchanging (406 - 412, 518) identifiers, said identifiers being a host identifier and a controller identifier, through the wireless communication link between the host and game controller.

15. The method as recited in claim 14, wherein the RF wireless connection is a radio band comprising multiple channels.

16. The method as recited in claim 15, wherein the exchanging is performed using a subset of the channels of the radio band.

17. The method as recited in claim 14, wherein the detecting is performed using received signal strength indication, RSSI.

18. The method as recited in claim 14, further comprising providing an authentication code from the game controller to the host.

19. The method as recited in claim 14, further comprising:
initiating (402, 404, 502) a binding mode at the host and controller, wherein exchanging identifiers comprises:
sending (408) a host identifier from the host to the game controller, wherein the game controller stores (410) the host identifier; and
receiving (412) at the host a controller identifier from the game controller, wherein the host stores the controller identifier.

20. The method as recited in claim 19, wherein the initiating comprises clearing memory in the host to store the controller identifier and clearing memory in the game controller to store the host identifier.

21. The method as recited in claim 19, wherein the sending is performed through the wireless communication link between the host and game controller.

22. The method as recited in claim 19, wherein the sending is performed through one of a bar code reader, a magnetic card reader, and a RF card reader.

23. The method as recited in claim 19, wherein the receiving further comprises an authentication code from the game controller.

24. The method as recited in claim 19, wherein the receiving is performed through the wireless communication link between the host and game controller.

25. The method as recited in claim 24, wherein the receiving further comprises an authentication code from the game controller.

26. The method as recited in claim 19, wherein the receiving is performed through one of a bar code reader, a magnetic card reader, and a RF card reader.

27. The method as recited in claim 26, wherein the receiving further comprises an authentication code from the game controller.

28. The method as recited in claim 14, further comprising:
providing memory locations in the host to store controller identifier values, and memory locations in one or more game controllers to store a host identifier value;
exchanging the host identifier value and the controller identifier values between the host and game controllers, wherein the exchanged host identifier value is placed in the memory locations of the game controllers and the exchanged controller identifier values are placed in the memory locations of the host; and
verifying (414, 416) the exchanged host identifier value and the controller identifier values, wherein verifying comprises resending the host identifier value and the controller identifier values and comparing the resent values with the values placed in the memory locations.

29. The method as recited in claim 28, wherein the providing comprises initiating (402, 404) a binding mode at the host and game controllers.

30. The method as recited in claim 28, further comprising receiving authentication codes from the one or more game controllers.

31. One or more computer-readable media comprising computer-executable instructions that, when executed on the gaming system of claims 1-13, perform the method as recited in one of claims 14 to 30.

32. A storage medium (112) for use with a gaming system (100) the storage medium having instructions that, when executed on the gaming system of claims 1-13, performs the method as recited in one of claims 14 to 30.

## Patentansprüche

1. Ein Spielesystem (100), das umfasst:
ein Host (102); und
eine Spielesteuereinrichtung (104), um sie an den Host durch ein Austauschen eines eindeutigen Host-Identifizierers (260), der den Host identifiziert, und einen eindeutigen Steuereinrichtungsidentifizierer (262), der die Spielesteuereinrichtung identifiziert, zu binden, wobei der Host umfasst:
Mittel, die angepasst sind, einen Benutzer des Spielsystems zu instruieren, die Spielesteuereinrichtung in naher Umgebung zu dem Host zu platzieren, und Mittel, die angepasst sind, um eine Signalstärke zu erfassen; und
wobei der Host und die Spielesteuereinrichtung Mittel umfassen, die angepasst sind, um die Übertragungsstärke und Empfangssensitivität des Hosts und der Spielesteuereinrichtung zu reduzieren, Mittel (270, 334), die angepasst sind, um eine kabellose Datenübertragungsverbindung zwischen dem Host und der Spielesteuereinrichtung basierend auf dem stärksten Signal, das durch den Host erfasst wird, herzustellen, und Mittel, die angepasst sind, um die Identifizierer auszutauschen.

2. Das Spielesystem nach Anspruch 1, wobei:
der Host den Host-Identifizierer in einem permanenten Speicher (204) speichert und den Steuereinrichtungsidentifizierer in einem beschreibbaren Speicher (206) speichert; und
die Spielesteuereinrichtung den Steuereinrichtungsidentifizierer in einem permanenten Speicher (308) speichert und den Konsolenidentifizierer in einem beschreibbaren Speicher (306) speichert.

3. Das Spielesystem nach Anspruch 1, wobei der Host und die Spielesteuereinrichtung durch Spieler aktivierte Knöpfe (320) umfassen, die verwendet werden, um den Austausch der Identifizierer zu beginnen.

4. Spielesystem nach Anspruch 1, wobei der Host und die Spielesteuereinrichtung kabellose Schnittstellen umfassen, um eine kabellose Verbindung beim Austausch der Identifizierer herzustellen.

5. Spielesystem nach Anspruch 4, wobei die kabellose Schnittstelle kabellose IR- oder RF-Technologien umfasst.

6. Spielesystem nach Anspruch 1, wobei der Host und die Spielesteuereinrichtung eine der folgenden Geräte umfassen, um die Identifizierer zu empfangen: einen Barcode-Leser, einen Magnetkartenleser und einen RF-Kartenleser.

7. Spielesystem nach Anspruch 1, wobei der Host umfasst:
einen Prozessor (200);
eine Schnittstelle, um den Steuereinrichtungsidentifizierer zu empfangen; und
einen Speicher (204, 206), der an den Prozessor gekoppelt ist, um den Host-Identifizierer und den Steuereinrichtungsidentifizierer zu speichern.

8. Spielesystem nach Anspruch 1, wobei die Spielesteuereinrichtung umfasst:
einen Prozessor (302);
eine Schnittstelle, um den Host-Identifizerer zu empfangen; und
einen Speicher (304-308), der an den Prozessor gekoppelt ist, um den Host-Identifizierer und den Steuereinrichtungsidentifizierer zu speichern.

9. Spielesystem nach Anspruch 1, wobei der Host eine Spielekonsole oder einen Personalcomputer umfasst.

10. Spielesystem nach Anspruch 1, wobei die Spielesteuereinrichtung einen Authentifizierungskode an den Host sendet und der Host basierend auf dem Authentifizierungskode ermittelt, ob er sich binden soll.

11. Spielesystem nach Anspruch 1, wobei die Spielesteuereinrichtung eine Allzweck-Steuereinrichtung mit einem oder mehreren Multifunktionsbedienteilen (316) darstellt.

12. Spielesystem nach Anspruch 1, wobei sich der Host an zwei oder mehr Spielesteuereinrichtungen durch das Bereitstellen des Host-Identifizierers an die Spielesteuereinrichtungen und das Empfangen von Steuereinrichtungsidentifizierern von den Spielesteuereinrichtungen bindet.

13. Spielesystem nach Anspruch 12, wobei der Host des Weiteren Authentifizierungskodes von den Spielesteuereinrichtungen empfängt, um zu ermitteln, ob er sich an eine oder mehrere der Spielesteuereinrichtungen bindet.

14. Verfahren zum Binden eines Hosts (102) und einer Spielesteuereinrichtung (104) unter Verwendung einer kabellosen RF-Verbindung (108), umfassend:
Instruieren (508) eines Benutzers der Spielesteuereinrichtung, dass der Host und die Spielesteuereinrichtung in nächster Umgebung zueinander platziert werden sollen, wobei das Instruieren durch den Host durchgeführt wird;
Reduzieren (510, 512) der Übertragungsstärke und Empfangssensitivität des Hosts und der Spielesteuereinrichtung;
Erfassen (516) der Signalstärke bei dem Host;
Herstellen einer kabellosen Datenübertragungsverbindung zwischen dem Host und der Spielesteuereinrichtung basierend auf dem stärksten Signal, das durch den Host erfasst wird; und
Austauschen (406-412, 518) von Identifizierern, durch die kabellose Datenübertragungsverbindung zwischen dem Host und der Spielesteuereinrichtung, wobei die Identifizierer ein Host-Identifizierer und ein Steuereinrichtungsidentifizierer sind.

15. Verfahren nach Anspruch 14, wobei die kabellose RF-Verbindung ein Funkbereich ist, das mehrere Kanäle umfasst.

16. Verfahren nach Anspruch 15, wobei das Austauschen unter Verwendung einer Teilmenge der Kanäle des Funkbereiches durchgeführt wird.

17. Verfahren nach Anspruch 14, wobei das Erfassen unter Verwendung einer empfangenen Signalstärkenindikation, RSSI (received signal strength indication), durchgeführt wird.

18. Verfahren nach Anspruch 14, das des Weiteren das Bereitstellen eines Authentifizierungscodes von der Spielesteuereinrichtung an den Host umfasst.

19. Verfahren nach Anspruch 14, das des Weiteren umfasst:
Initiieren (402, 404, 502) eines Bindungsmodus bei dem Host und der Steuereinrichtung, wobei das Austauschen von Identifizierern umfasst:
Senden (408) eines Host-Identifizierers von dem Host zu der Spielesteuereinrichtung, wobei die Spielesteuereinrichtung den Host-Identifizierer speichert (410); und
Empfangen (412) eines Steuereinrichtungsidentifizierers von der Spielesteuereinrichtung bei dem Host, wobei der Host den Steuereinrichtungsidentifizierer speichert.

20. Verfahren nach Anspruch 19, wobei das Initiieren das Löschen eines Speichers in dem Host, um den Steuereinrichtungsidentifizierer zu speichern, und das Löschen eines Speichers in der Spielesteuereinrichtung, um den Host-Identifizierer zu speichern, umfasst.

21. Verfahren nach Anspruch 19, wobei das Senden durch die kabellose Datenübertragungsverbindung zwischen dem Host und der Spielesteuereinrichtung ausgeführt wird.

22. Verfahren nach Anspruch 19, wobei das Senden durch einen Barcode-Leser, einen Magnetkartenleser oder einen RF-Kartenleser ausgeführt wird.

23. Verfahren nach Anspruch 19, wobei das Empfangen des Weiteren einen Authentifizierungskode von der Spielesteuereinrichtung umfasst.

24. Verfahren nach Anspruch 19, wobei das Empfangen durch die kabellose Datenübertragungsverbindung zwischen dem Host und der Spielesteuereinrichtung ausgeführt wird.

25. Verfahren nach Anspruch 24, wobei das Empfangen des Weiteren einen Authentifizierungskode von der Spielesteuereinrichtung umfasst.

26. Verfahren nach Anspruch 19, wobei das Empfangen durch einen Barcode-Leser, Magnetkartenleser oder RF-Kartenleser ausgeführt wird.

27. Verfahren nach Anspruch 26, wobei das Empfangen des Weiteren einen Authentifizierungskode von der Spielesteuereinrichtung umfasst.

28. Verfahren nach Anspruch 14, das des Weiteren umfasst:
Bereitstellen von Speicherplätzen in dem Host, um Steuereinrichtungsidentifiziererwerte zu speichern und von Speicherplätzen in einer oder mehreren Spielesteuereinrichtungen, um einen Host-Identifiziererwert zu speichern;
Austauschen des Host-Identifiziererwertes und der Steuereinrichtungsidentifiziererwerte zwischen dem Host und der Spielesteuereinrichtungen, wobei der ausgetauschte Host-Identifiziererwert in die Speicherplätze der Spielesteuereinrichtungen platziert wird, und die ausgetauschten Steuereinrichtungsidentifiziererwerte in den Speicherplätzen des Hosts platziert werden; und
Verifizieren (414, 416) des ausgetauschten Host-Identifiziererwertes und der Steuereinrichtungsidentifiziererwerte, wobei das Austauschen das erneute Senden des Host-Identifiziererwertes und der Steuereinrichtungsidentifiziererwerte und das Vergleichen der erneut gesendeten Werte mit den Werten, die in den Speicherplätzen platziert sind, umfasst.

29. Verfahren nach Anspruch 28, wobei das Bereitstellen das Initiieren (402, 404) eines Bindungsmodus bei dem Host und den Spielesteuereinrichtungen umfasst.

30. Verfahren nach Anspruch 28, das des Weiteren das Empfangen von Authentifizierungskodes von der einen oder den mehreren Spielesteuereinrichtungen umfasst.

31. Ein oder mehrere computerlesbare Datenträger, die computerausführbare Instruktionen umfassen, die, wenn sie auf dem Spielesystem nach Ansprüchen 1 bis 13 ausgeführt werden, das Verfahren nach einem der Ansprüche 14 bis 30 ausführen.

32. Ein Speicherdatenträger (112) zur Verwendung mit einem Spielesystem (100), wobei der Speicherdatenträger Instruktionen aufweist, die, wenn sie auf dem Spielesystem nach Ansprüchen 1 bis 13 ausgeführt werden, das Verfahren nach einem der Ansprüche 14 bis 30 ausführen.

## Revendications

1. Système de jeu (100) comprenant :
un hôte (102) ; et
un dispositif de commande de jeu (104) devant être relié à l'hôte par un échange d'un identificateur d'hôte unique (260) identifiant l'hôte et d'un identificateur de dispositif de commande unique (262) identifiant le dispositif de commande de jeu, dans lequel l'hôte comprend :
un moyen conçu pour fournir à un utilisateur du système de jeu une instruction pour placer le dispositif de commande de jeu à proximité étroite de l'hôte, et un moyen conçu pour détecter la puissance du signal ; et
dans lequel l'hôte et le dispositif de commande de jeu comprennent un moyen conçu pour réduire la puissance d'émission et la sensibilité de réception de l'hôte et du dispositif de commande de jeu, des moyens (270, 334) conçus pour établir une liaison de communication sans fil entre l'hôte et le dispositif de commande de jeu sur la base du signal le plus puissant détecté par l'hôte,
et un moyen conçu pour échanger lesdits identificateurs.

2. Système de jeu selon la revendication 1, dans lequel :
l'hôte stocke l'identificateur d'hôte dans une mémoire permanente (204) et stocke l'identificateur de dispositif de commande de jeu dans une mémoire inscriptible (206) ; et
le dispositif de commande de jeu stocke l'identificateur de dispositif de commande dans une mémoire permanente (308) et stocke l'identificateur de console dans une mémoire inscriptible (306).

3. Système de jeu selon la revendication 1, dans lequel l'hôte et le dispositif de commande de jeu comprennent des boutons activés par le joueur (320) utilisés pour lancer l'échange des identificateurs.

4. Système de jeu selon la revendication 1, dans lequel l'hôte et le dispositif de commande de jeu comprennent des interfaces sans fil pour établir une liaison sans fil pour l'échange des identificateurs.

5. Système de jeu selon la revendication 4, dans lequel les interfaces sans fil sont composées d'une des technologies sans fil IR et RF.

6. Système de jeu selon la revendication 1, dans lequel l'hôte et le dispositif de commande de jeu comprennent l'un des dispositifs suivants pour recevoir les identificateurs : un lecteur de code à barres, un lecteur de carte magnétique et un lecteur de carte RF.

7. Système de jeu selon la revendication 1, dans lequel l'hôte comprend :
un processeur (200) ;
une interface pour recevoir l'identificateur de dispositif de commande ; et
une mémoire (204, 206) couplée au processeur pour stocker l'identificateur d'hôte et l'identificateur de dispositif de commande.

8. Système de jeu selon la revendication 1, dans lequel le dispositif de commande de jeu comprend :
un processeur (302) ;
une interface pour recevoir l'identificateur d'hôte; et
une mémoire (304 - 308) couplée au processeur pour stocker l'identificateur d'hôte et l'identificateur de dispositif de commande.

9. Système de jeu selon la revendication 1, dans lequel l'hôte est l'un d'une console de jeu ou d'un ordinateur personnel.

10. Système de jeu selon la revendication 1, dans lequel le dispositif de commande de jeu envoie à l'hôte un code d'authentification et l'hôte détermine s'il doit se connecter en se basant sur le code d'authentification.

11. Système de jeu selon la revendication 1, dans lequel le dispositif de commande de jeu est mis en oeuvre en tant que dispositif de commande polyvalent avec un ou plusieurs actionneurs multifonctions (316).

12. Système de jeu selon la revendication 1, dans lequel l'hôte se connecte à deux dispositifs de commande de jeu ou plus en fournissant aux dispositifs de commande de jeu l'identificateur d'hôte et en recevant les identificateurs de dispositif de commande en provenance des dispositifs de commande de jeu.

13. Système de jeu selon la revendication 12, dans lequel l'hôte reçoit en outre des codes d'identification depuis les dispositifs de commande de jeu pour déterminer s'il doit se connecter à un ou plusieurs des dispositifs de commande de jeu.

14. Procédé de liaison d'un hôte (102) et d'un dispositif de commande de jeu (104) à l'aide d'une connexion sans fil RF (108) comprenant les étapes consistant à :
envoyer une instruction (508) à un utilisateur du dispositif de commande de jeu que l'hôte et le dispositif de commande de jeu doivent être placés à proximité étroite l'un de l'autre, l'envoi de l'instruction étant exécuté par l'hôte ;
réduire (510, 512) la puissance d'émission et la sensibilité de réception de l'hôte et du dispositif de commande de jeu ;
détecter (516) la puissance du signal au niveau de l'hôte ;
établir une liaison de communication sans fil entre l'hôte et le dispositif de commande de jeu sur la base du signal le plus puissant détecté par l'hôte ; et
échanger (406 - 412, 518) les identificateurs, lesdits identificateurs étant un identificateur d'hôte et un identificateur de dispositif de commande, par l'intermédiaire de la liaison de communication sans fil entre l'hôte et le dispositif de commande de jeu.

15. Procédé selon la revendication 14, dans lequel la connexion sans fil RF est une bande radio comprenant de multiples voies.

16. Procédé selon la revendication 15, dans lequel l'échange est exécuté à l'aide d'un sous-ensemble des voies de la bande radio.

17. Procédé selon la revendication 14, dans lequel la détection est exécutée à l'aide de l'indication de puissance de signal reçue, RSSI.

18. Procédé selon la revendication 14, comprenant en outre l'étape consistant à fournir un code d'authentification du dispositif de commande de jeu à l'hôte.

19. Procédé selon la revendication 14, comprenant en outre l'étape consistant à :
lancer (402, 404, 502) un mode de liaison au niveau de l'hôte et du dispositif de commande, l'échange des identificateurs comprenant les étapes consistant à :
envoyer (408) un identificateur d'hôte de l'hôte au dispositif de commande de jeu, le dispositif de commande de jeu stockant (410) l'identificateur d'hôte ; et
recevoir (412) au niveau de l'hôte un identificateur de dispositif de commande en provenance du dispositif de commande de jeu, l'hôte stockant l'identificateur de dispositif de commande.

20. Procédé selon la revendication 19, dans lequel le lancement comprend l'étape consistant à vider la mémoire de l'hôte pour stocker l'identificateur de dispositif de commande et vider la mémoire du dispositif de commande de jeu pour stocker l'identificateur d'hôte.

21. Procédé selon la revendication 19, dans lequel l'envoi est exécuté par l'intermédiaire de la liaison de communication sans fil entre l'hôte et le dispositif de commande de jeu.

22. Procédé selon la revendication 19, dans lequel l'envoi est exécuté par l'intermédiaire de l'un parmi un lecteur de code à barres, un lecteur de carte magnétique et un lecteur de carte RF.

23. Procédé selon la revendication 19, dans lequel la réception comprend en outre un code d'authentification en provenance du dispositif de commande de jeu.

24. Procédé selon la revendication 19, dans lequel la réception est exécutée par l'intermédiaire de la liaison de communication sans fil entre l'hôte et le dispositif de commande de jeu.

25. Procédé selon la revendication 24, dans lequel la réception comprend en outre un code d'authentification en provenance du dispositif de commande de jeu.

26. Procédé selon la revendication 19, dans lequel la réception est exécutée par l'intermédiaire d'un élément parmi un lecteur de code à barres, un lecteur de carte magnétique et un lecteur de carte RF.

27. Procédé selon la revendication 26, dans lequel la réception comprend en outre un code d'authentification en provenance du contrôleur de jeu.

28. Procédé selon la revendication 14, comprenant en outre les étapes consistant à :
prévoir des emplacements de mémoire dans l'hôte pour stocker les valeurs d'identificateur de contrôleur, et des emplacements de mémoire dans un ou plusieurs contrôleurs de jeu pour stocker une valeur d'identificateur d'hôte ;
échanger la valeur d'identificateur d'hôte et les valeurs d'identificateur de contrôleur entre l'hôte et les contrôleurs de jeu, dans lequel la valeur d'identificateur d'hôte échangée est placée dans les emplacements de mémoire des contrôleurs de jeu, et les valeurs d'identificateur de contrôleur échangées sont placées dans les emplacements de mémoire de l'hôte ; et
vérifier (414, 416) la valeur d'identificateur d'hôte et les valeurs d'identificateur de contrôleur échangées, dans lequel la vérification comprend les étapes consistant à renvoyer la valeur d'identificateur d'hôte et les valeurs d'identificateur de contrôleur et comparer les valeurs renvoyées avec les valeurs placées dans les emplacements de mémoire.

29. Procédé selon la revendication 28, dans lequel la prévision comprend l'étape consistant à lancer (402, 404) un mode de liaison au niveau de l'hôte et des contrôleurs de jeu.

30. Procédé selon la revendication 28, comprenant en outre l'étape consistant à recevoir les codes d'authentification en provenance de l'un ou des plusieurs contrôleurs de jeu.

31. Un ou plusieurs supports lisibles par ordinateur comprenant des instructions exécutables par ordinateur qui, lorsqu'elles sont exécutées sur le système de jeu selon les revendications 1 à 13 exécutent, le procédé selon l'une des revendications 14 à 30.

32. Support d'information (112) devant être utilisé avec un système de jeu (100), le support d'information ayant des instructions qui, lorsqu'elles sont exécutées sur le système de jeu selon les revendications 1 à 13, exécutent le procédé selon l'une des revendications 14 à 30.
